# EUROPÄISCHE PATENTANMELDUNG

(11) **EP 0 647 477 A1**
(43) Veröffentlichungstag der Anmeldung: **12.04.1995**
(21) Anmeldenummer: 94114606.0
(22) Anmeldetag: 16.09.1994
(51) Int. Cl.: B05D 1/18

(54) **Auf Trägern angebrachte ein oder mehrlagige Schichtelemente und ihre Herstellung**

(30) Priorität: 29.09.1993 DE 4333107
(71) Anmelder: BAYER AG, 51368 Leverkusen (DE)
(72) Erfinder: Decher, Gero, Dr., D-65203 Wiesbaden (DE); Schmitt, Johannes, D-65597 Hünfelden (DE); Heiliger, Ludger, Dr., D-51373 Leverkusen (DE); Siegmund, Hans-Ulrich, Dr., Elkhart, IN 46516 (US)

(57) **Zusammenfassung**

Es werden auf Trägern angebrachte ein- oder mehrlagige Schichtelemente beschrieben, bestehend aus
a) einem modifizierten Träger, wobei die Modifizierung die flächenweite Anbringung von Reaktivgruppen mit gleichsinniger Reaktivität bedeutet, und
b) einer oder mehrerer Schichten aus organischen Polymermaterialien, die in jeder Schicht gleichsinnig reaktive Reaktivgruppen enthalten, wobei die Reaktivgruppen der ersten Schicht reaktionsbereit mit den Reaktivgruppen des Trägers sind und bei mehreren Schichten jede weitere wiederum Reaktivgruppen mit Reaktionsbereitschaft zur vorangegangenen aufweist und wobei die Reaktivgruppen kovalente Bindungen ausbilden.

Solche auf Trägern angebrachte Schichtelemente werden so hergestellt, daß die einzelnen Schichten aus Lösungen der organischen Polymermaterialien in geeigneten Lösungsmitteln auf modifizierten Trägern durch sequentielle Chemisorption (Ausbildung kovalenter Bindungen) aufgebracht werden.

## Beschreibung

Die Erfindung betrifft auf Trägern angebrachte Schichtelemente, die ein- oder mehrlagig sein können und durch kovalente Bindungen miteinander verknüpft sind. Die einzelnen Schichten werden aus einer Lösung von für die Schichtbildung in Frage kommenden organischen Polymermaterialien zunächst auf einem modifizierten Träger und dann auf der jeweils vorangegangenen Schicht angebracht. Es handelt sich somit um ein hochvernetztes dreidimensionales System (Nanocomposit). Der Aufbau dieser Schichtelemente erfolgt somit durch sequentielle Chemisorption (Ausbildung kovalenter Bindungen). Die Erfindung betrifft weiterhin die Herstellung solcher Schichtelemente.

Beschichtete Träger finden in der industriellen Technik mannigfaltige Verwendung. Beispielsweise können die Reibungseigenschaften von Materialien durch entsprechende Behandlung ihrer Oberfläche einem gewünschten Zweck angepaßt werden. Weiterhin kann es sich um einen Schutzfilm für die darunterliegenden Träger handeln, um deren besondere Oberflächeneigenschaften zu konservieren (Kratzfestigkeit). Insbesondere haben jedoch in letzter Zeit beschichtete Träger als Komponenten für die optische Kommunikationstechnik sowie als elektronische und optoelektronische Informationsspeicher Einsatz gefunden.

Insbesondere für die elektronischen und optischen Einsatzzwecke ist es erforderlich, äußerst dünne, defektfreie mehrlagige Beschichtungen zu erzeugen, deren Lagen einen hohen Ordnungsgrad und eine einstellbare, weitgehend homogene Schichtdicke haben, wobei dieser hohe Ordnungsgrad auch im Bereich einer großen Anzahl von Beschichtungslagen erhalten bleiben soll.

Die aus geeigneten organischen Materialien hergestellten dünnen Schichten stellen demnach die Grundlage für auf Molekularebene angeordnete, defektfreie Systeme dar, wie sie z.B. erforderlich sind für
- optische Anwendungen (gerichtete Strahlung geringer Dämpfung, z.B. Lichtwellenleiter mit nichtlinearoptischen Eigenschaften),
- elektrische Anwendungen (elektrische Leiter hoher Anisotropie, z.B. eindimensionale oder zweidimensionale Leiter auf dem Gebiet der Molekularelektronik),
- "Wirtsgitter" für den definierten Einbau bzw. eine spezifische Bindung von funktionellen Gruppen oder Molekülen.

Weitere Einsatzgebiete solcher auf Trägern angebrachter Schichtelemente sind die Modifizierung von Elektroden und ihr Einsatz in der Katalyse chemischer Reaktionen.

Die bisher am meisten untersuchte Methode zur Herstellung von ultradünnen Filmen und mehrlagigen Schichten ist die klassische Langmuir-Blodgett(LB)-Methode. Hierbei erfolgt der Schichtaufbau durch sequentielle Übertragung von Monoschichten von einer Wasseroberfläche auf ein festes Substrat. Diese Methode ist durch einen relativ hohen apparativen Aufwand, der dennoch die Beschichtung nur kleiner Träger erlaubt, gekennzeichnet. Das organische Material zum Aufbau der Schichten muß eine ausreichende Fähigkeit zum Spreiten auf der Wasseroberfläche aufweisen.

Weiterhin wurde versucht, Carboxylgruppen enthaltende Träger, wie sie beispielsweise durch Oxidation von Polyethylenträgern hergestellt werden können, zur Grundlage gleichmäßiger Beschichtung zu machen. Hierzu wurden z.B. langkettige Carbonsäuren mit Hilfe von Kalziumionen aus einer Lösung auf den beschriebenen Träger gebracht. Die Kalziumionen vermitteln eine ionische Bindung zwischen den Carboxylgruppen des Trägers und der aufgebrachten Carbonsäure. Da Dicarbonsäuren und Kalziumionen aus einer Lösung heraus sofort zu einem unlöslichen und nicht mehr weiter verwendbaren Salzniederschlag führen würden, können nur Monocarbonsäuren eingesetzt werden. Wollte man auf diese erste Schicht weitere Schichten aufbringen, müßte der nicht funktionalisierte, von Carboxylgruppe abgewandte Molekülteil der Carbonsäure funktionalisiert werden, um einen weiteren Aufbau zu ermöglichen. Noch weiterhin wurde versucht, durch alternierende Reaktion von 1,10-Decan-bisphosphat und seinem Zirkoniumsalz oder durch Zirkonylchlorid einen mehrlagigen Schichtaufbau zu erzeugen. Solche Versuche endeten nach etwa 8 Schichten, weil dann die Oberfläche zu starke Defekte für einen geordneten weiteren Schichtaufbau zeigte. Im Falle der Verwendung des Zirkonylchlorids kann als Quelle der Defektbildung der Wechsel vom anorganischen Kristallgitter zum damit kombinierten organischen Kristall angenommen werden.

Es ist weiter beobachtet worden, daß eine ionisch modifizierte Trägeroberfläche beim Versuch der Beschichtung mit α,ω-beidseitig mit Ionen versehenen organischen Molekülen, wobei die Ionen den entgegengesetzten Ladungssinn haben, dadurch Defekte auftraten, daß viele Moleküle der beidseitig mit Ionen versehenen organischen Moleküle sich nicht senkrecht zur Trägeroberfläche anordnen und dadurch mit nur einem ionischen Ende dieses Moleküls eine Bindung mit dem Träger eingehen, sondern sich flächig, d.h. parallel zur Trägeroberfläche anordnen und mit den beiden ionischen Enden des Moleküls eine Bindung mit der ionischen Trägeroberfläche eingehen. Dadurch bleibt einerseits keine funktionelle Gruppe (in diesem Fall die 2. ionische Gruppe dieses organischen Moleküls) für den weiteren Aufbau von Schichten übrig und zum anderen bedeckt ein solches unerwünschterweise parallel zur Trägeroberfläche adsorbiertes organisches Molekül die zwischen den beiden entstehenden Bindungsstellen vorhandenen ionischen Gruppen des darunterliegenden Trägers und schließt diese bedeckten ionischen Gruppen von der Bildung geordneter Schichten aus.

Die Bildung von organischen Monoschichten ist schließlich durch Adsorption organischer Mercaptoverbindungen, beispielsweise auf Goldoberflächen möglich, (Self-Assembly-Technik).

Es bestand daher weiterhin das Bedürfnis nach auf Trägern angebrachten Schichtelementen, die einen hohen Ordnungsgrad ohne die beschriebenen Defekte aufweisen. Solche auf Trägern angebrachten Schichtelemente sollten weiterhin eine größere mechanische und thermische Stabilität sowie eine größere Lösungsmittelbeständigkeit als etwa LB-Schichten aufweisen. Zusätzlich sollten neue auf Trägern angebrachte Schichtelemente in Form größerer Flächen herstellbar sein.

Die genannten Nachteile werden durch die erfindungsgemäßen auf Trägern angebrachten ein- oder mehrlagigen Schichtelemente überwunden. Die erfindungsgemäßen Schichtelemente bilden ein geordnetes Organisat, welches durch Chemisorption unter Ausbildung kovalenter Bindungen (Nanocomposit) erhalten wird und bei dem jeweils eine gleichförmig reaktive Oberfläche besteht, die in der Folgeschicht mit organischen Polymermolekülen belegt wird, die Reaktivgruppen mit Reaktionsbereitschaft zur vorangegangenen Schicht aufweisen.

Die Erfindung betrifft auf einem Träger angebrachte Schichtelemente, bestehend aus
a) einem modifizierten Träger, wobei die Modifizierung die flächenweite Anbringung von Reaktivgruppen mit gleichsinniger Reaktivität bedeutet, und
b) einer oder mehrerer Schichten aus organischen Polymermaterialien, die in jeder Schicht gleichsinnig reaktive Reaktivgruppen enthalten, wobei die Reaktivgruppen der ersten Schicht reaktionsbereit mit den Reaktivgruppen des Trägers sind und bei mehreren Schichten jede weitere wiederum Reaktivgruppen mit Reaktionsbereitschaft zur vorangegangenen aufweist und wobei die Reaktivgruppen kovalente Bindungen ausbilden.

Die Erfindung betrifft weiterhin ein Verfahren zur Herstellung von auf Trägern angebrachten Schichtelementen, das dadurch gekennzeichnet ist, daß man
i) einen Träger so modifiziert, daß er flächenweit Reaktivgruppen mit gleichsinniger Reaktivität trägt, und
ii) bei einer Temperatur von 0 bis 80°C, bevorzugt 10 bis 60°C, besonders bevorzugt 15 bis 40°C, eine oder mehrere Schichten aus organischen Polymermaterialien, die in jeder Schicht gleichsinnig reaktive Reaktivgruppen enthalten, aus einer Lösung solcher organischer Polymermaterialien auf den modifizierten Träger aufträgt, wobei das organische Polymermaterial für die erste Schicht Reaktivgruppen mit Reaktionsbereitschaft zu den die Modifizierung des Trägers darstellenden Reaktivgruppen aufweist und im Falle von mehreren Schichten abwechselnd weitere Schichten mit Reaktivgruppen in gleicher Weise wie die erste Schicht aufträgt, wobei die Reaktivgruppen jeweils reaktionsbereit mit den Reaktivgruppen der vorhergehenden Schicht sind und kovalente Bindungen ausbilden.

Multischichtsysteme der beschriebenen Art bestehen aus mindestens 2 Materialien mit entgegengesetzt reaktionsbereiten Reaktivgruppen. Der einfachste Schichtaufbau entspricht also dem Typ ABABAB... . Die Funktionalität der Schichten kann aber durch die Verwendung von mehr als 2 Materialien gezielt erhöht werden, z.B. ABCBABABCB .. oder ABCDCBADCBAC..., wobei A und C sowie B und D eine gleichsinnige Reaktivität aufweisen. Der Schichtaufbau ergibt sich konsequent aus der Auswahl des Tauchbades zum jeweiligen Auftragen der einzelnen Schichten.

Das erfindungsgemäße Verfahren erlaubt die großflächige Herstellung geordneter Multischichten Schichtelementen auf Trägern.

Als Träger für die erfindungsgemäßen Schichtelemente kommen solche mit ebenmäßiger Oberfläche in Frage, beispielsweise ebene, zylinderförmige, kegelförmige, kugelförmige oder andere gleichmäßig geformte Träger; Träger mit ebener Oberfläche sind bevorzugt. Die Träger können für verschiedene optische oder elektrische Anwendungsgebiete transparent, undurchlässig oder reflektierend sowie elektrisch leitend, halbleitend oder isolierend sein. In weiterer Ausbildung der Erfindung kommen aber auch kugelförmige und pulverförmige Träger in Frage, wenn katalytisch wirksame und für diesen Zweck einsetzbare erfindungsgemäße Multischichtsysteme hergestellt werden sollen. Die chemische Natur dieser Träger kann anorganisch oder organisch sein. Anorganische Trägermaterialien sind beispielsweise Metalle, Halbleitermaterialien, Gläser oder keramische Materialien, wie Gold, Platin, Nickel, Palladium, Aluminium, Chrom, Stahl und andere Metalle Germanium, Galiumarsenid, Silicium und andere Halbleitermaterialien, Gläser der verschiedensten chemischen Zusammensetzung, Quarzglas, weitere Gläser, sowie Porzellan und weitere Mischoxide, die als keramische Materialien verstanden werden. Weitere anorganische Stoffe, die sich als Träger eignen sind etwa Graphit, Zinkselenid, Glimmer, Siliciumdioxid, Lithiumniobat und weitere Träger, gegebenenfalls als anorganische Einkristalle, wie sie dem Fachmann aus der LB-Technik bekannt sind.

Organische Materialien für die Träger in den erfindungsgemäßen Schichtelementen sind wegen der Dimensionsstabilität und der Lösungsmittelbeständigkeit vorwiegend polymere Werkstoffe. Genannt seien beispielsweise: Polyester, wie Polyethylenterephthalat, Polybutylenterephthalat und andere, Polyvinylchlorid, Polyvinylidenfluorid, Polytetrafluorethylen, Polycarbonat, Polyamid, Poly(methyl)acrylate, Polystyrol, Polyethylen oder Ethylen-vinylacetat-Copolymer. Auch solche organische Träger sind dem Fachmann aus der LB-Technik bekannt.

Die chemische Natur des Trägermaterials spielt eine untergeordnete Rolle, so daß die obigen Aufzählungen nur beispielhaft und nicht erschöpfend sind.

Die erfindungsgemäß einzusetzenden Träger werden so modifiziert, daß sie flächenweit mit Reaktivgruppen gleichsinniger Reaktivität bedeckt sind. Diese flächenweite Anbringung kann eine erste monomolekulare Schicht, die fest mit dem Träger verknüpft ist, bedeuten. Ein weiteres Beispiel für die Modifizierung solcher Träger stellt die Physisorption von Polyethylenimin (PEI) dar, wodurch an der Oberfläche Aminogruppen vorliegen. Die flächenweite Anbringung von Reaktivgruppen kann jedoch auch durch eine chemische Reaktion am Träger selbst bewirkt werden, bei der an der Oberfläche im Ausmaß einer monomolekülaren Schicht eine dichte Belegung mit gleichsinnig reaktiven Gruppen bewirkt wird. Eine solche Modifizierung ist dem Fachmann, der auf dem Gebiet mehrlagiger dünner Schichten tätig ist, bekannt. Beispiele hierfür sind Self-Assembly-Monoschichten, z.B. aus einem α,ω-Dithiol, Cysteamin, Aminogruppen enthaltenden Thiolen und anderen Thiolen, die eine weitere Reaktivgruppe enthalten, auf Metallen, wie Gold, Silber, Cadmium und anderen. Hierbei verbindet sich die Thiolgruppe fest mit der metallischen Oberfläche und die zweite Thiolgruppe, eine Carboxylgruppe, eine Aminogruppe oder eine andere Reaktivgruppe bildet die Modifizierung des einzusetzenden metallischen Trägers. Ein weiteres wichtiges Beispiel ist eine Silanisierung der Oberfläche mit Alkoxygruppen enthaltenden Silanen oder mit Chlorsilanen, die zusätzlich eine weitere Reaktivgruppe enthalten.

Diese Silanisierung ist in der dem Fachmann bekannten Weise bei allen Silicium enthaltenden Trägern möglich. Die Reaktivgruppe kann beispielsweise eine Sulfonsäuregruppe oder eine Aminogruppe sein. Ein noch weiteres Beispiel betrifft die chemische Modifizierung polymerer organischer Träger. So kann beispielsweise Polyethylen durch Oxidationsmittel, wie Chromsäure, oberflächlich mit Carboxylgruppen ausgerüstet werden. (Meth)acrylate oder (Meth)acrylamide können durch Verseifung ebenfalls oberflächlich mit Carboxylgruppen ausgerüstet werden, die ihrerseits in bekannter Weise in Säurechloridgruppen umgewandelt werden können. Auch die oberflächliche Sulfinierung von Polystyrolharzen führt zu einer erfindungsgemäß nutzbaren Modifizierung. Die zuletztgenannten modifizierten Polymere können auch als Flachionenaustauscher bezeichnet werden. Es ist dem Fachmann weiterhin geläufig, daß anstelle von Carboxylgruppen oder Sulfonylgruppen auch Aminogruppen durch Chlormethylierung und nachfolgende Einführung einer Aminogruppe eingeführt werden können. Solche Umsetzungen sind als polymeranaloge Reaktionen bekannt.

Bevorzugte modifizierte Träger werden ausgewählt aus der Gruppe
- der mit einem Thiol einschichtig belegten Metalloberflächen, wobei das Thiol eine weitere ionische oder ionisierbare funktionelle Gruppe tragen kann,
- der chemisch reaktiven Gruppen, bevorzugt Aminogruppen tragenden Metalloberflächen,
- der mit einem Silan behandelten, Silicium enthaltenden Träger, wobei das Silan eine ionische oder ionisierbare funktionelle Gruppe oder eine chemisch reaktive Gruppe, bevorzugt die Aminogruppe, trägt, und
- der Polymeren, die durch polymeranaloge Umsetzung oberflächlich ionische oder ionisierbare funktionelle Gruppen oder chemisch reaktive Gruppen, bevorzugt Amino- oder Säurechlorid-Gruppen, tragen.

In allen genannten und in weiteren denkbaren Fällen ist es nicht kritisch, welcher Art Reaktivgruppen auf der Oberfläche des Trägers sind, sondern die dichte, flächenweite Belegung mit solchen Gruppen ist ausschlaggebend

Wichtig ist fernerhin, daß stets gleichsinnig reaktive Gruppen die Modifizierung des Trägers darstellen, wie weiter unten näher erläutert wird.

Die organische Polymermaterialien zur Ausbildung der einzelnen Schichten auf dem modifizierten Träger stellen Polymere mit einer Vielzahl von Reaktivgruppen gleichsinniger Reaktivität dar. Hierbei ist es durchaus denkbar, daß verschiedene Gruppen im Polymermolekül vertreten sein können, wenn sie nur gleichsinnig reaktiv sind. Aus Gründen der Zugänglichkeit und leichteren Herstellbarkeit ist es jedoch bevorzugt, daß die Reaktivgruppen identisch sind.

Die zur Ausbildung der Schichtelemente erforderlichen Polymermaterialien sind gekennzeichnet durch in großer Zahl vorliegende funktionelle Gruppen. Diese funktionellen Gruppen können im Verlauf der Polymerkette oder als Seitengruppen an der Polymerkette vorliegen. Als funktionelle Gruppe sind grundsätzlich alle geeignet, die zwischen zwei Schichtelementen kovalente Bindungen ausbilden können. In oder an der Polymerkette vorliegende Reaktivgruppen sind beispielsweise solche der folgenden Aufzählung:
-COOH, -COCl, -OCOCl, -SO₃H, SO₂Cl, -NCO, -NCS, 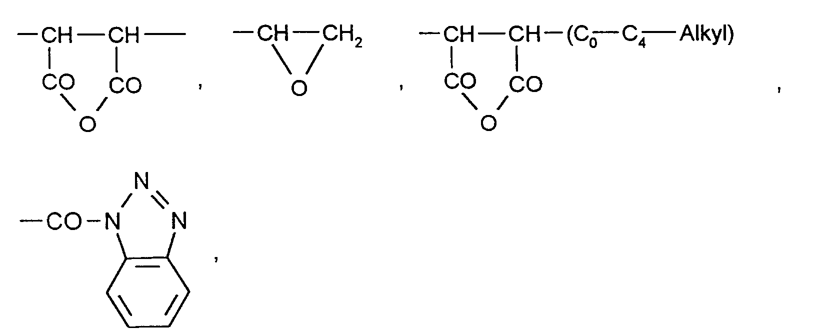
-COO-Phenyl, -COO-(C₁-C₄-Alkyl), -NH₂, -NH-Phenyl, -NH-(C₁-C₄-Alkyl), -NH-Benzyl, -NH-, -OH, ferner aktivierte Carboxylgruppen, wobei die Aktivierung durch Carbonyldiimidazol, R-CO-imidazol oder R-O-CO-imidazol vorgenommen sein kann.

Bevorzugt kommen Reaktivgruppen der folgenden Aufzählung in Frage: 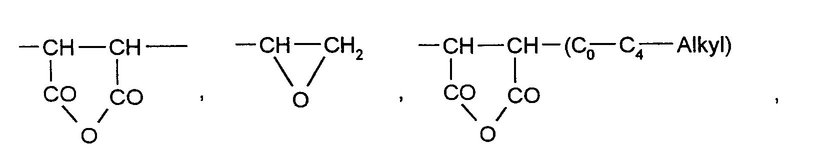
COCl, -NCO, -COO-Phenyl, -COO-(C₁-C₄-Alkyl), -NH₂, -NH-,

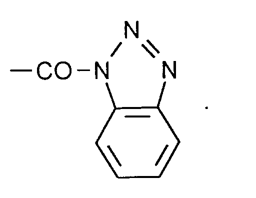

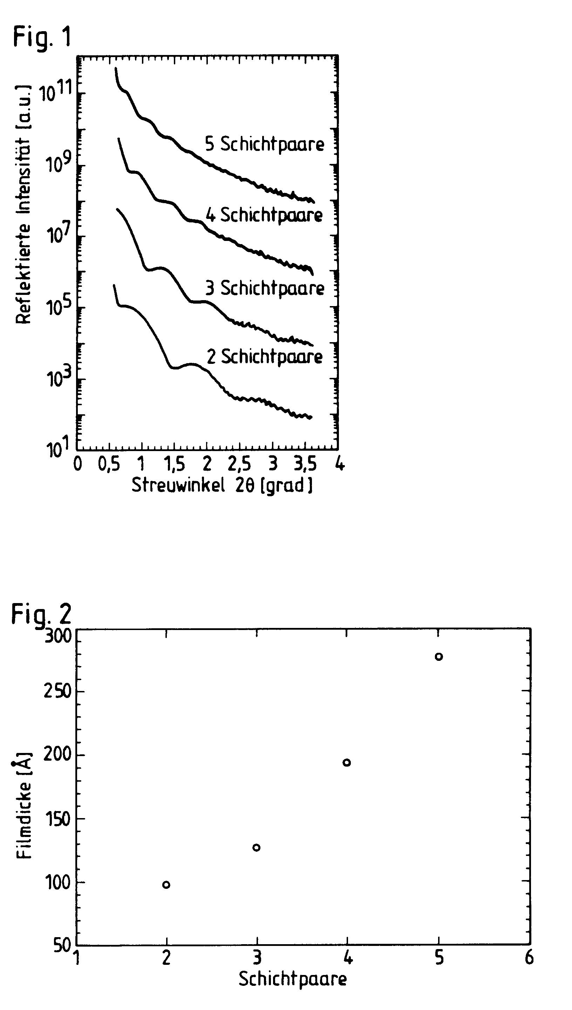

Von diesen Reaktivgruppen liegt beispielsweise die in der Polymerkette beidseitig gebundene Anhydridgruppe in Form eines Copolymer vor, welches einpolymerisiertes Maleinsäureanhydrid enthält. Ein einseitig angebundenes Säureanhydrid kann beispielsweise noch C₀-C₄-Alkyl enthalten. C₀-Alkyl bedeutet hierbei Wasserstoff als Substituenten. C₁-C₄-Alkyl ist beispielsweise Methyl, Ethyl, Propyl, Isopropyl, Butyl oder Isobutyl. In den jeweils aufeinanderfolgenden Schichten werden Polymere mit jeweils entgegensinnig reaktiven Reaktivgruppen verwendet. So kann beispielsweise auf einem mit Aminogruppen modifiziertem Träger zunächst eine Schicht aus Poly-1-acryloyl-benzotriazol (PAB) aufgetragen werden, die gefolgt wird von einer zweiten Schicht aus Polyallylamin (PAA). In beiden Fällen, nämlich zwischen dem Amin-modifizierten Träger und der ersten Schicht und zwischen der ersten und der zweiten Schicht tritt die Ausbildung kovalenter Bindungen unter Austritt von Benzotriazol ein. Die kovalenten Bindungen stellen hierbei eine Säureamidgruppe dar. Die beiden Stoffe können formelmäßig wie folgt dargestellt werden: 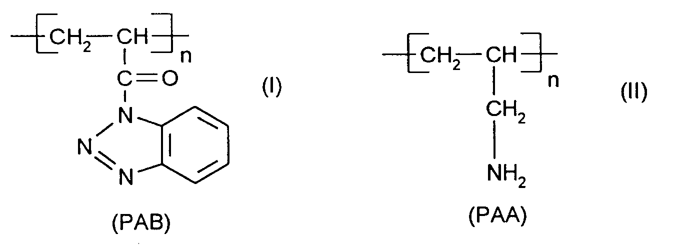
Es ist für den Fachmann klar, daß die Polymerkette, die durch die eckigen Klammern und dem tiefgestellten Index n ausgedrückt wird, sowohl ein Homopolymer symbolisieren kann, als auch ein Copolymer mit weiteren ethylenisch ungesättigten oder vinylisch ungesättigten Verbindungen darstellen kann, von dem nur die erfindungsgemäß wichtige Reaktivgruppe dargestellt wird. Das angegebene Beispiel ist in Abb. 1 schematisch dargestellt, wobei x Moleküle Benzotriazol (Btz-H) austreten. Die Schritte A und B können beliebig wiederholt werden und zum erfindungsgemäßen Multischichtaufbau führen.

Ein weiteres beispielhaftes Paar von erfindungsgemäß einsetzbaren organischen Polymermaterialien mit gegensinnig reaktiven Reaktivgruppen, das in ähnlicher Weise, wie in Abb. 1 dargestellt, Multischichten bilden kann, ist das aus Poly(Styrol-Co-Maleinsäureanhydrid) (PSPMA), worin die beiden Comonomeren im allgemeinen im Verhältnis x:y = 1:1 vorliegen, und Polyethylenimin (PEI), die formelmäßig wie folgt dargestellt werden können: 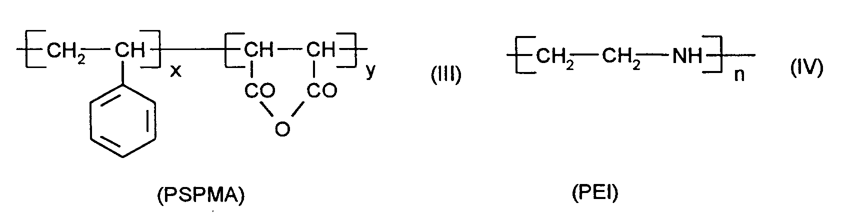
Aus dem Anhydridring in (III) und dem Iminowasserstoff in (IV) bildet sich wieder unter Ringöffnung ein Säureamid aus, das kovalent die beiden Schichten verbindet. An die Stelle von (III) kann auch ein Divinylether-Maleinsäureanhydrid-Copolymer (DIVIMA) der Formel (V) treten: 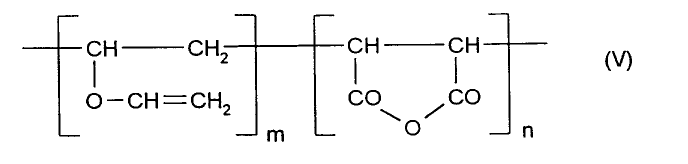
Ein noch weiteres Beispiel, das formelmäßig angegeben wird, ist der wechselweise Mehrschichtenaufbau aus einem Copolymer (Copo) aus Styrol, m-Isocyanatoisopropyl-α-methylstyrol und einem dioxolanhaltigen Methacrylat der Formel (VI), wiederum mit PEI:
Copo aus

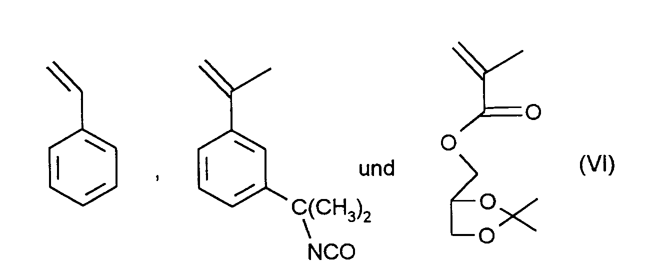

Weitere kovalent verknüpfte Schichten zu einem Multischichtaufbau können gebildet werden unter Einsatz von Polymermaterialien mit Reaktivgruppen der Paare (a) Aktivester/Amin, (b) Isocyanat/Amin und (c) Anhydrid/Amin.

Als Aktivester seien beispielhaft folgende genannt: 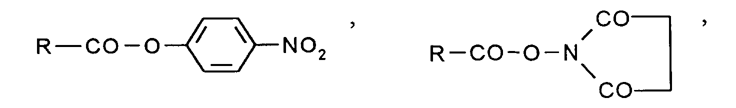 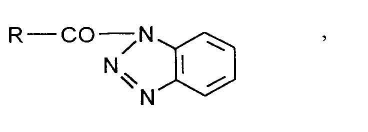
worin R die Bindung zum Polymer darstellt.

Die einsetzbaren Polymermaterialien enthalten demnach nie gleichzeitig Reaktivgruppen gegensinniger Reaktivität. Es ist jedoch sehr wohl denkbar, daß solche Polymermaterialien Reaktivgruppen gleichsinniger Reaktivität enthalten, beispielsweise gleichzeitig Carboxylgruppe und Carbonsäurechloridgruppe oder gleichzeitig Anhydrid und Carbonsäurechloridgruppe oder gleichzeitig Carbonsäurechloridgruppe und Sulfonylchloridgruppe oder gleichzeitig Aminogruppe und Hydroxylgruppe, was gegenüber einer Carbonsäurechloridgruppe zur gleichzeitigen Ausbildung einer Säureamidgruppe und einer Estergruppe führen würde. Weitere Kombinationen solcher gleichsinnig reaktiver Reaktivgruppen sind dem Fachmann aus der obigen Aufzählung klar erkennbar.

Die Menge an Reaktivgruppen, ausgedruckt in Äquivalentprozent, die zur Ausbildung der jeweils folgenden Schicht zur Verfügung gestellt werden muß, ergibt sich aus folgender Überlegung: Setzt man die aus dem Träger oder aus der jeweils vorangegangenen Schicht herausragenden Reaktivgruppen (beispielsweise Aminogruppen) mit 100 Äquivalent-% an, so wird man für die folgende Schicht mindestens 200 Äquivalent-% gegensinnig reaktionsbereiter Reaktivgruppen (beispielsweise Säurechloridgruppen) ansetzen, von denen 100 Äquivalent-% zur Bindung am Träger oder der vorangegangenen Schicht verbraucht werden, während 100 Äquivalent-% übrig bleiben und zur kovalenten Anbindung einer weiteren Schicht, beispielsweise wieder mit Hilfe von Aminogruppen, gegebenenfalls aber auch mit Hilfe von Hydroxylgruppen führen können. Diese Zahl von insgesamt 200 Äquivalent-% ist jedoch lediglich ein theoretisches Erfordernis, das mindestens erfüllt sein sollte. So ist es dem Fachmann bekannt, daß auch weniger als die zuerst genannten 100 Äquivalent-% zur kovalenten Bindung an die vorangegangene Schicht ausreichen und somit mehr als weitere 100 Äquivalent-% zur Ausbildung einer kovalenten Bindung an die folgende Schicht zur Verfügung stehen können. Es ist dem Fachmann aber auch weiterhin bekannt, daß Polymere vielfach durch ihren geknäulten Aufbau Reaktivgruppen im Innern eines solchen Knäuls enthalten können, die aus sterischen Gründen weder an einer kovalenten Bindung zur vorangegangenen Schicht noch an einer kovalenten Bindung zur folgenden Schicht teilnehmen können. Die Menge an Äquivalent-% reicht daher von 50 bis 600 %, bevorzugt von 75 bis 300 %.

Das erfindungsgemäße Multischichtsystem, bestehend aus einem Träger der beschriebenen Art und Polymermaterialien mit den genannten Reaktivgruppen, kann weiterhin ergänzt werden durch zwischengefügte Schichten, bei denen zwar ebenfalls von Polymermaterialien Gebrauch gemacht wird, das jedoch einen Polyelektrolyt mit jeweils gleichsinnigen Ladungen, also beispielsweise eine Polysulfonsäure oder eine Polycarbonsäure oder ein Polyaminsalz darstellt. Der grundsätzliche Aufbau solcher Multischichten ist in DE-OS 40 26 978 dargestellt. Hierbei erfolgt die Bindung von einer Schicht zur anderen durch ionische Kräfte. Diese ionischen Bindungen können in vielen Fällen in erfindungsgemäße kovalente Bindungen übergehen. So kann beispielsweise aus einer Poly-Salzbindung aus Carboxylgruppen und protonierten Aminogruppen durch Wasserabspaltung die kovalente Bindung einer Carbonsäureamidgruppe hervorgehen.

Verglichen mit den erfindungsgemäß wichtigen Reaktivgruppen der genannten Art ist die Art des Polymer, das Reaktivgruppen enthält oder trägt, von untergeordneter Bedeutung. Wichtig sind im Zusammenwirken von Reaktivgruppen und dem sie tragenden oder enthaltenden Polymer lediglich die Verfügbarkeit und Zugänglichkeit. Werden jedoch besondere thermische und/oder mechanische Eigenschaften der erfindungsgemäßen Schichtelemente verlangt, gewinnt auch die Art des Polymer an Bedeutung.

Die Kette des polymeren organischen Materials für die Schichtelemente kann demzufolge ein Polyolefin, ein Acrylpolymer, ein Polyvinylacetat, ein Polyester, ein Polyamid, ein Polyetherketon, eine Poly- oder Copolyaminosäure, wie Polylysin oder Polyglutaminsäure oder ein anderes, dem Fachmann bekanntes Polymer sein. Das Polymer kann die Reaktivgruppen in der oder an der Polymerkette tragen; die Reaktivgruppe kann durch Copolymerisation mit geeigneten Comonomeren oder durch polymeranaloge Umsetzung in das erfindungsgemäß einsetzbare Polymermaterial gelangen.

Sowohl in monomere organische Materialien als auch in polymere organische Materialien können Farbstoffe und für die endgültige Verwendung der erfindungsgemäßen auf Trägern angebrachten Schichtelemente wichtige Wirkstoffe durch kovalente Bindung angebracht oder integriert werden. Ein Beispiel ist jeweils ein Stoff aus dem Paar Antikörper/Antigen für Zwecke der Sensorik.

Bei den Polymermaterialien kann die Dicke der aufgebrachten Monoschicht durch Variation der Parameter Polymermolgewicht, Art des Lösungsmittels, Konzentration und Adsorptionszeit eingestellt werden. So ergeben kleine Molgewichte und/oder Kleine Konzentrationen kleinere Schichtdicken, während große Molgewichte und/oder hohe Konzentrationen größere Schichtdecken ergeben.

Die durchschnittlichen Molgewichte der Polymermaterialien liegen im Bereich von 5 000 bis 10 Millionen.

Zur Herstellung der erfindungsgemäßen auf Trägern angebrachten Schichtelemente können die einzelnen Schichten auf den modifizierten Träger aus ihren Lösungen in einem geeigneten Lösungsmittel aufgetragen werden. Hierbei wird bei jedem folgenden Auftrag eine Lösung mit organischem Polymermaterial mit jeweils gegensinnigen Reaktivgruppen verwendet. Zwischen den einzelnen Aufträgen werden ungebundene Restmengen an organischem Material aus dem jeweils vorangegangenen Auftrag durch Spülen entfernt.

Als Lösungsmittels sind geeignet: Wasser und mit Wasser mischbare, nichtionische Lösungsmittel, wie C₁-C₄-Alkanole, C₃-C₆-Ketone einschließlich des Cyclohexanons, Tetrahydrofuran, Dioxan, Dimethylsulfoxid, Ethylenglykol, Propylenglykol sowie Oligomere von Ethylen- und Propylenglykol sowie deren Ether und offenkettige und cyclische Amide, wie Dimethylformamid, Dimethylacetamid, N-Methylpyrrolidon und andere. In den Fällen, in denen mit Wasser, Alkoholen oder anderen protischen Lösungsmitteln reagierende Reaktivgruppen vorliegen, werden polare, aprotische Lösungsmittel, wie Chloroform oder Methylchlorid in Frage kommen, die einen Anteil der obengenannten organischen Lösungsmittel enthalten können, soweit eine Mischbarkeit mit diesen gegeben ist.

Das erfindungsgemäße Verfahren zur Herstellung der neuen auf Trägern angebrachten Schichtelemente kann leicht in die kontinuierliche Arbeitsweise umgesetzt werden, indem man den zu beschichtenden modifizierten Trägernacheinander durch verschiedene Bäder mit den abwechselnd aufzutragenden organischen Materialien und dazwischengeschaltete Bäder mit Waschflüssigkeiten führt. Dies ist eine erhebliche Arbeitserleichterung, verglichen mit der LB-Technik. Sie wird erleichtert dadurch, daß die Anforderungen an die Sauberkeit zwischen dem Auftrag zweier Schichten nicht so hoch sind wie bei der LB-Technik.

Ein weiterer, sehr wichtiger Vorteil gegenüber der LB-Technik besteht darin, daß es grundsätzlich keine Beschränkung in der Größe und Form der zu beschichtenden Träger (Substrate) gibt. So sind alle für die Lösungen der Polymermaterialien zugänglichen Flächen, also auch unebene und sonst schlecht zugängliche innenliegende, beschichtbar, z.B. Schlauchinnenseiten, wo die LB-Technik versagt.

Zur Herstellung der erfindungsgemäß auf einem Träger angebrachten Schichtelemente werden die Schichten einzeln in einem Temperaturbereich von 0 bis 80°C, bevorzugt 10 bis 60°C, besonders bevorzugt 15 bis 40°C, aus der Lösung von Polymermaterialien, die Reaktivgruppen der oben beschriebenen Art enthalten, aufgetragen. Der Druck ist für das Auftragen der Schichtelemente von untergeordneter Bedeutung und kann daher ganz allgemein 0,1 bis 50 bar, bevorzugt 0,5 bis 2 bar, besonders bevorzugt etwa den atmosphärischen Druck betragen. Lediglich bei Anwendung niedrigsiedender Lösungsmittel kann es vorteilhaft sein, bei einem Druck von bis zu 10 bar zu arbeiten.

Das Polymermaterial mit den erwähnten Reaktivgruppen muß stabil in der zum Auftragen der Schichtelemente verwendeten Lösung sein; hierzu wird in der erwähnten Weise bei Anwendung von Reaktivgruppen, die mit C-H-aktiven Lösungsmitteln reagieren, in aprotischen Lösungsmitteln gearbeitet. Zur Erhöhung der Aktivität solcher Reaktivgruppen sind die Lösungsmittel weiterhin in bevorzugter Weise polar. Es hat sich weiterhin als vorteilhaft herausgestellt, die Konzentration des Polymermaterials im Lösungsmittel so zu wählen, daß die hierbei entstehende und zur Anwendung kommende Lösung 10⁻⁴ bis 10⁻¹-molar bezüglich der Anzahl der Reaktivgruppen ist. Die Einwirküngszeit solcher Lösungen gegenüber dem Träger oder gegenüber der vorangegangenen Schicht beträgt 0,1 min bis 24 h, bevorzugt 1 min bis 3 h, besonders bevorzugt 5 bis 60 min.

Das erfindungsgemäße Verfahren zeichnet sich dadurch aus, daß zur Ausbildung kovalenter Bindungen zwischen einer neu aufzutragenden Schicht und der darunter befindlichen Schicht oder dem darunter befindlichen Träger keine Aktivierung der darunter befindlichen Schicht oder des darunter befindlichen Trägers erforderlich ist. So ist insbesondere der zusätzliche Schritt einer Entfernung von Schutzgruppen von der darunter befindlichen Schicht oder dem darunter befindlichen Träger, etwa zur Aktivierung dieser darunter befindlichen Schicht oder des darunter befindlichen Trägers, nicht erforderlich.

Es ist gelungen, 1 bis 30 Schichten auf einem modifizierten Träger im erfindungsgemäßen Sinn anzubringen In den verschiedenen Anwendungsbebieten kann eine abweichende Zahl von Schichten vorteilhaft sein, etwa 2 bis 25 Schichten oder 2 bis 20 Schichten. Die erfindungsgemäßen Möglichkeiten reichen jedoch weiter: so ist es unschwer vorstellbar, 50 oder auch 100 Schichten anzubringen. Der Gesamtumfang beträgt demnach 1-100, bevorzugt 2-100, besonders bevorzugt 2-50, ganz besonders bevorzugt 4-50 Schichten. Die erfindungsgemäßen Schichtelemente wurden durch folgende Meßmethoden charakterisiert:

Mittels UV/Vis-Spektroskopie wurden die Schichtsysteme, beispielsweise auf Quarzträgern, in Transmission in Abhängigkeit von der Schichtdicke untersucht. Ein gleichförmiges Aufwachsen der Schichten wurde durch eine konstante Zunahme der optischen Absorption nachgewiesen.

### Beispiel 1

### Die Silanisierung des Trägers

Als Träger wurde Quarzglas bzw. Siliciumwafer verwendet. Der Wafer wurde 1 Minute lange mit H₂O im Ultraschallbad behandelt und mit N₂-Gas sorgfältig getrocknet, wobei die Oberflächen staubfrei gereinigt wurde. Dann wurde der Wafer zur Vorreinigung in Caro'sche Säure (konz. H₂SO₄/H₂O₂ = 7/3) gebracht und darin bei 80°C 1 Stunde lang im Ultraschallbad behandelt. Nach der Abkühlung auf Raumtemperatur wurde der Wafer dreimal jeweils 60 Sekunden in H₂O im Ultraschallbad behandelt und mit H₂O säurefrei gewaschen. Anschließend wurde der Wafer in H₂O/H₂O₂/NH₃ (5:1:1)-Lösung gebracht und darin 15 Minuten lang bei 80°C behandelt. Danach wurde der Wafer in H₂O gebracht und sorgfältig salzfrei gewaschen. Schließlich wurde der Wafer vor der Silanisierungsreaktion zur Entfernung von Wasserspuren jeweils 2 Minuten lang in Methanol, Methanol/Toluol und Toluol behandelt. Der so erhaltene Wafer wurde in 5 %iger 4-Aminobutyldimethylmethoxysilan-Lösung in Toluol unter N₂-Atmosphäre gegeben. Die Silanisierungsreaktion wurde unter N₂-Atmosphäre behandelt. Schließlich wurde der Wafer 1 Minute lang mit Toluol behandelt. Man erhielt eine homogene hydrophobe Oberfläche.

### Beispiel 2

### Poly-1-acryloyl-benzotriazol/Polyallylamin

Der Multischichtaufbau wurde mit Röntgenkleinwinkelstreuung (SAXS) verfolgt. Fig. 1 zeigt Röntgenreflexionsmessungen nach der Deponierung von 2, 3, 4 und 5 Schichtpaaren PAB/PAA. Die korrespondierenden Filmdicken sind in Fig. 2 dargestellt.

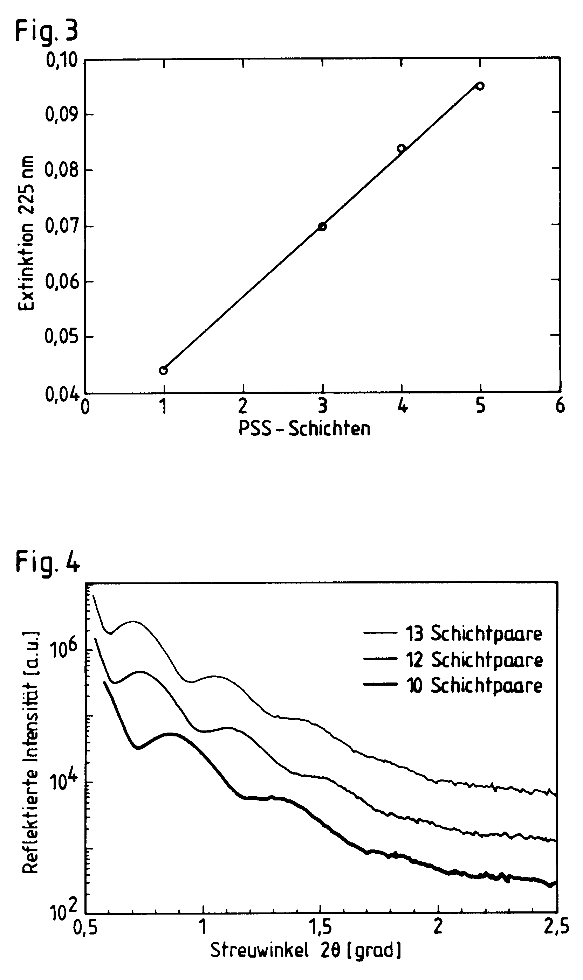

Da die oberste PAA-Schicht ionisierbar ist, war es möglich, weitere Schichten mittels Physisorption aufzubauen. Als Polyelektrolytpaar wurde hierzu Polystyrolsulfonat, Na-Salz, (PSS) und Polyallylaminhydrochlorid (PAH) verwendet. Der Multischichtaufbau wurde mit UV/Vis-Spektroskopie verfolgt. Fig. 3 zeigt die Zunahme der Extinktion am Absorptionsmaximum von PSS (225 nm) im Verlauf des Aufbaus.

### Experimentelles

Als Substrat wurde ein aminobutylsilanisierter Quarzträger verwendet. Die Polymerlösungen setzten sich wie folgt zusammen:
- PAB:: 15,03 mg PAB in 10 ml Chloroform.
- PAA:: 25,76 mg PAH und 0,2 ml frisch destillliertes Triethylamin in 5 ml H₂O.

Der pH-Wert der Lösung betrug ca. 12. Bei diesem pH-Wert liegt das PAH in der umprotonierten Form (PAA) vor.

Das Substrat wurde bei Raumtemperatur für jeweils 24 Stunden in den jeweiligen Lösungen von PAB und PAA deponiert.

Zwischen den Adsorptionsschritten wurde das Substrat je dreimal eine Minute in Chloroform bzw. H₂O gewaschen.

Mit zunehmender Schichtzahl war eine geringe Trübung des Substrats festzustellen. Anstelle von Chloroform als Lösungsmittel für das PAB ist auch Dichlormethan verwendbar.

### Beispiel 3

### Copo/Polyethylenimin

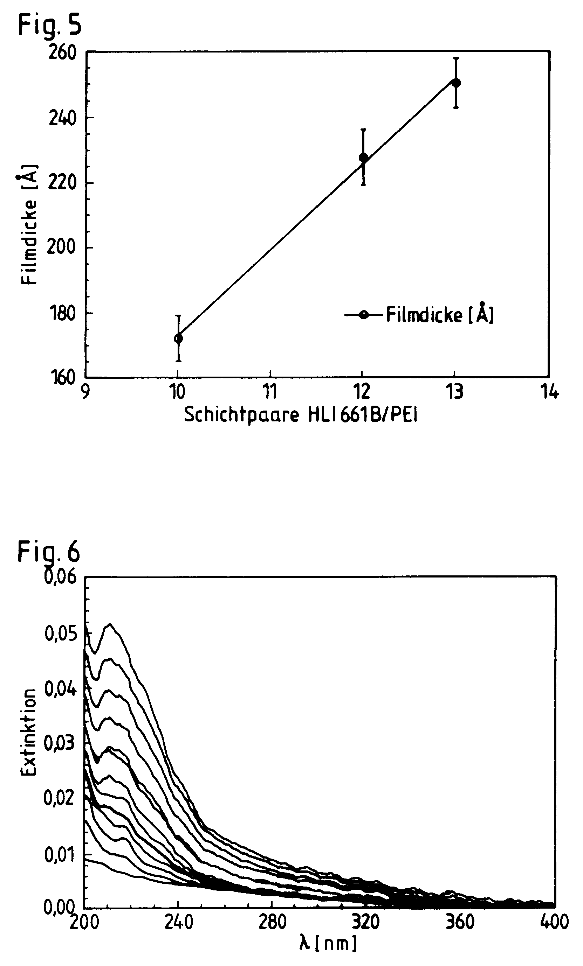

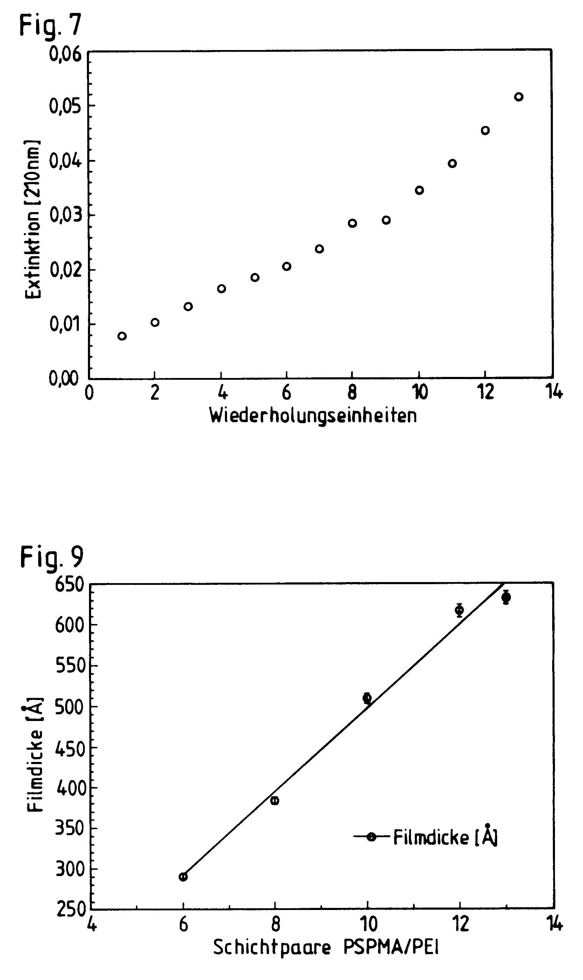

Der Multischichtaufbau wurde mit SAXS und UV/Vis-Spektroskopie verfolgt. Fig. 4 zeigt die Röntgenreflexionskurven nach der Deponierung von 10, 12 und 13 Schichtpaaren. Die entsprechenden Filmdicken sind in Fig. 5 dargestellt. Die Ergebnisse der UV/Vis-Spektroskopie sind in den Fig. 6 und 7 wiedergegeben.

### Experimentelles

Als Substrat wurde ein aminobutylsilanisierter Quarzträger verwendet. Die Polymerlösungen setzten sich wie folgt zusammen:

| | |
|---|---|
| Copo: | 5,89 mg Copo, wie oben beschrieben, in 50 ml Chloroform |
| PEI: | 125 mg PEI in 100 ml H₂O |

Die Adsorptionsdauer betrug jeweils 30 Minuten. Zwischen den Adsorptionsscshritten wurde das Substrat je dreimal eine Minute in Chloroform bzw. H₂O gewaschen. Das Substrat blieb im Verlauf des Multischichtaufbaus transparent.

### Beispiel 4

### Poly-(styrol-co-maleinsäureanhydrid)

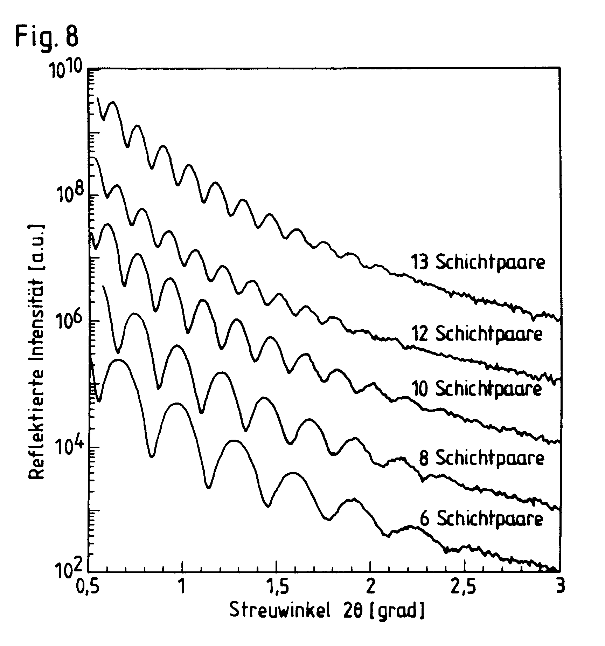

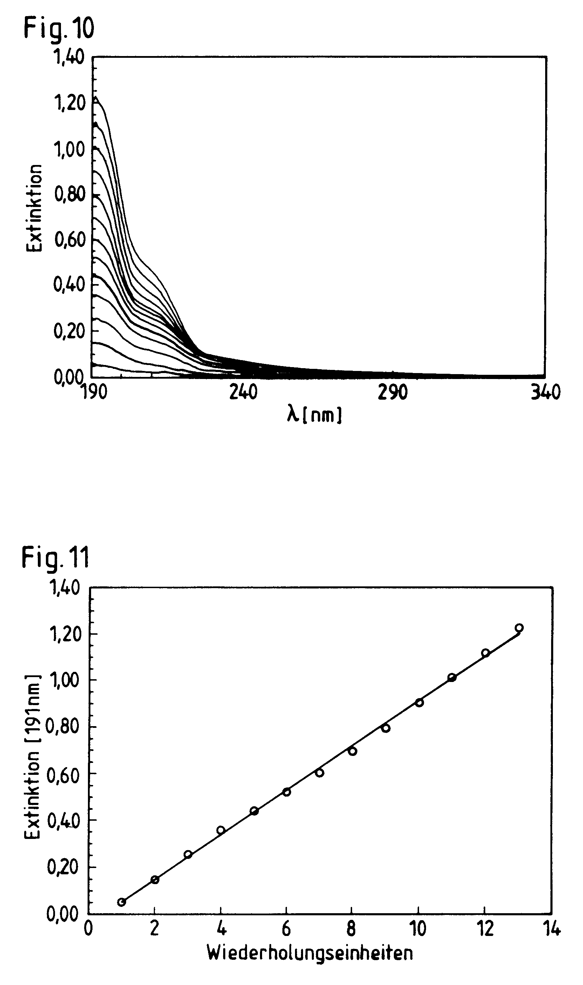

Der Multischichtaufbau wurde mit SAXS und UV/Vis-Spektroskopie verfolgt. Fig. 8 zeigt die Röntgenreflexionskurven nach der Deponierung von 6, 8, 10, 12 und 13 Schichtpaaren. Die entsprechenden Filmdicken sind in Fig. 9 dargestellt. Die Ergebnisse der UV/Vis-Spektroskopie ist in Fig. 10 und 11 wiedergegeben.

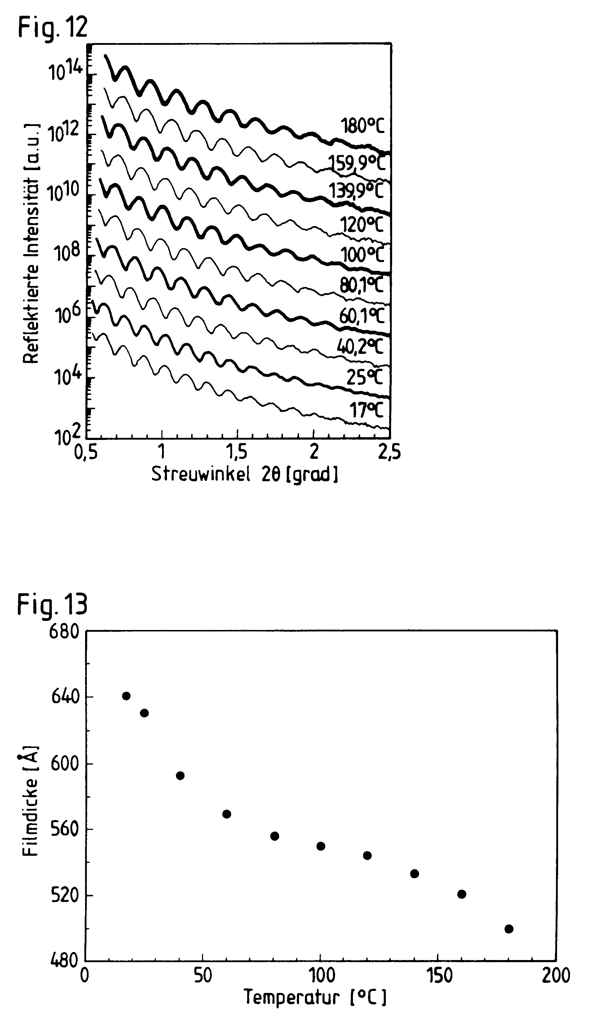

Das Multischichtsystem wurde ebenfalls auf sein Temperaturverhalten hin untersucht. Dazu wurden Röntgenreflexionsmesungen bei 10 verschiedenen Temperaturen zwischen 17°C (Raumtemperatur) und 180°C vorgenommen. Fig. 12 zeigt die erhaltenen Spektren. In Fig. 13 sind die korrespondierenden Filmdicken dargestellt.

### Experimentelles

Als Substrat wurde ein aminobutylsilanisierter Quarzträger verwendet. Die Polymerlösungen setzten sich wie folgt zusammen:

| | |
|---|---|
| PSPMA: | 21,26 mg PSPMA in 10 ml Aceton |
| PEI: | 125 mg PEI in 100 ml H₂O |

Die Adsorptionsdauer betrug jeweils 30 Minuten. Zwischen den Adsorptionsschritten wurde das Substrat je dreimal eine Minute in Aceton bzw. H₂O gewaschen.

Das Substrat blieb im Verlauf des Schichtaufbaus transparent. Nach den temperaturabhängigen Röntgenmessungen war ein Rückgang der Filmdicke zu beobachten, was auf ein nachträgliches "Vernetzen" innerhalb der Schichten zurückgeführt werden kann (Fig. 13, "nach Abkühlen").

### Beispiel 5

### Kombination von Chemisorption und Physisorption

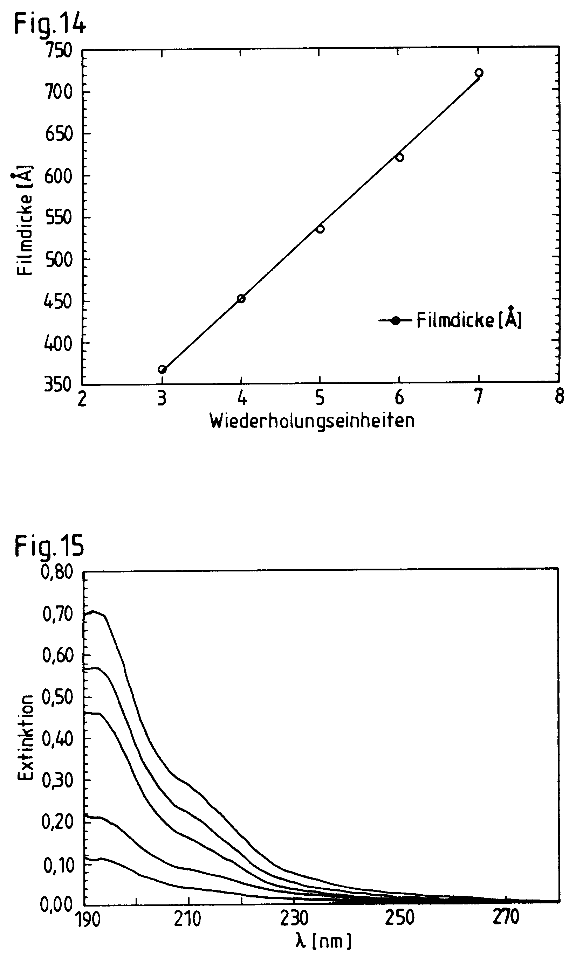

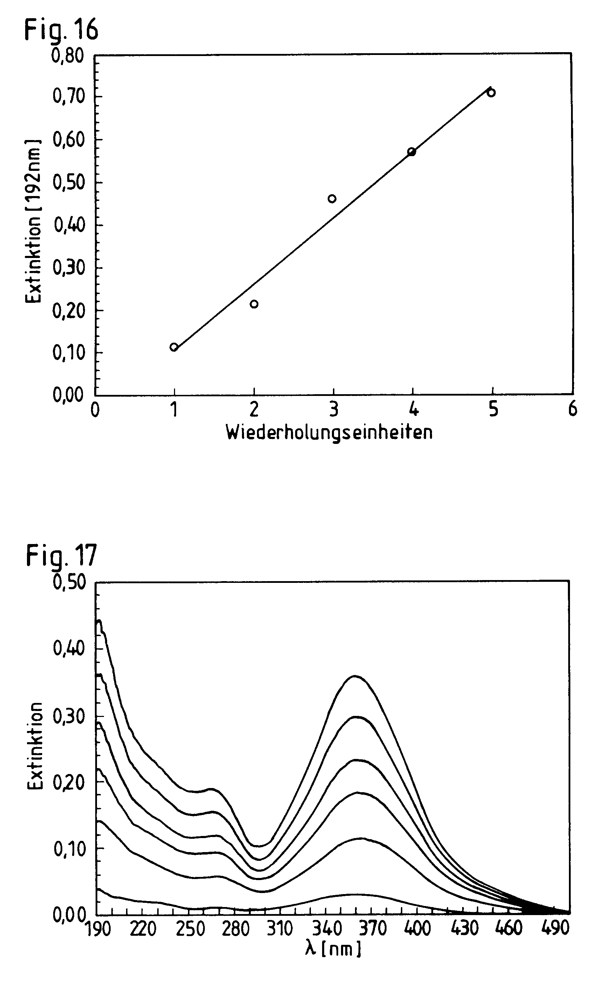

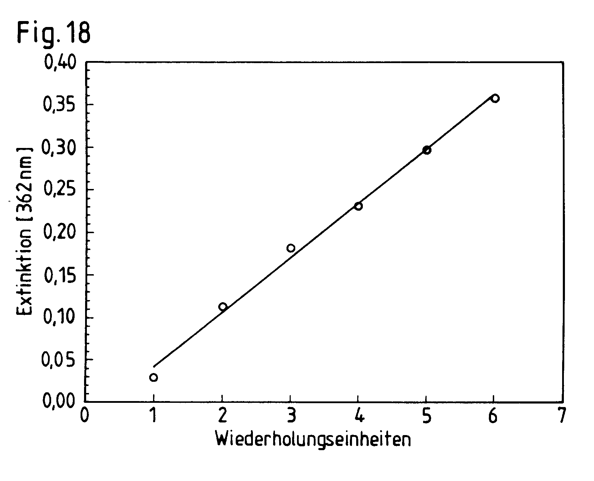

Wie oben erwähnt, ist es möglich, Chemie- und Physisorption zu kombinieren. Als weiteres Beispiel wurde eine Übergitterstruktur aus jeweils zwei chemisorbierten Schichten PSPMA/PEI und zwei physisorbierten Schichten Poly-{1-[4-(3-carboxy-4-hydroxyphenylazo)-benzolsulfonamido]-ethen-diyl, Natriumsalz}(PAZO) und PEI aufgebaut. Die gewählte Schichtfolge war [PAZO/PEI/PSPMA/PEI]ₓ. Fig. 14 zeigt die Zunahme der Filmdicke im Verlauf des Multischichtaufbaus. In den Fig. 15 und 16 und Fig. 17 und 18 sind die Ergebnisse der UV/Vis-Spektroskopie dargestellt.

### Experimentelles

Als Substrat wurde ein Quarzträger verwendet, der mit einer ersten Schicht 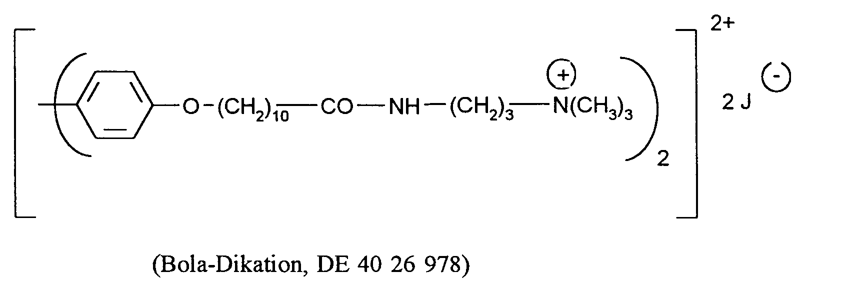
versehen war. Die Polymerlösungen setzten sich wie folgt zusammen:

| | |
|---|---|
| PSPMA: | 21,26 mg PSPMA in 10 ml Aceton |
| PEI: | 125 mg PEI in 100 ml H₂O |
| PAZO: | 1,011·10⁻² mol/l PAZO, 0,1016 mol/l NaCl |

Die Adsorptionsdauer betrug jeweils 30 Minuten. zwischen den Adsorptionsschritten wurde das Substrat je dreimal eine Minute in Aceton bzw. H₂O gewaschen.

## Patentansprüche

1. Auf einem Träger angebrachtes Schichtelement, bestehend aus
a) einem modifizierten Träger, wobei die Modifizierung die flächenweite Anbringung von Reaktivgruppen mit gleichsinniger Reaktivität bedeutet, und
b) einer oder mehrerer Schichten aus organischen Polymermaterialien, die in jeder Schicht gleichsinnig reaktive Reaktivgruppen enthalten, wobei die Reaktivgruppen der ersten Schicht reaktionsbereit mit den Reaktivgruppen des Trägers sind und bei mehreren Schichten jede weitere wiederum Reaktivgruppen mit Reaktionsbereitschaft zur vorangegangenen aufweist und wobei die Reaktivgruppen kovalente Bindungen ausbilden.

2. Verfahren zur Herstellung von auf einem Träger angebrachten Schichtelementen, dadurch gekennzeichnet, daß man
i) einen Träger so modifiziert, daß er flächenweit Reaktivgruppen mit gleichsinniger Reaktivität trägt, und
ii) bei einer Temperatur von 0 bis 80°C, bevorzugt 10 bis 60°C, besonders bevorzugt 15 bis 40°C, eine oder mehrere Schichten aus organischen Polymermaterialien, die in jeder Schicht gleichsinnig reaktive Reaktivgruppen enthalten, aus einer Lösung solcher organischer Polymermaterialien auf den modifizierten Träger aufträgt, wobei das organische Polymermaterial für die erste Schicht Reaktivgruppen mit Reaktionsbereitschaft zu den die Modifizierung des Trägers darstellenden Reaktivgruppen aufweist und im Falle von mehreren Schichten abwechselnd weitere Schichten mit Reaktivgruppen in gleicher Weise wie die erste Schicht aufträgt, wobei die Reaktivgruppen jeweils reaktionsbereit mit den Reaktivgruppen der vorhergehenden Schicht sind und kovalente Bindungen ausbilden.

3. Schichtelemente nach Anspruch 1, bei denen die modifizierten Träger ausgewählt werden aus der Gruppe
- der mit einem Thiol einschichtig belegten Metalloberflächen, wobei das Thiol eine weitere ionische oder ionisierbare funktionelle Gruppe tragen kann,
- der chemisch reaktiven Gruppen, bevorzugt Aminogruppen tragenden Metalloberflächen,
- der mit einem Silan behandelten, Silicium enthaltenden Träger, wobei das Silan eine ionische oder ionisierbare funktionelle Gruppe oder eine chemisch reaktive Gruppe, bevorzugt die Aminogruppe, trägt, und
- der Polymeren, die durch polymeranaloge Umsetzung oberflächlich ionische oder ionisierbare funktionelle Gruppen oder chemisch reaktive Gruppen, bevorzugt Amino- oder Säurechlorid-Gruppen, tragen.

4. Schichtelemente nach Anspruch 1, gekennzeichnet durch 1 bis 100, bevorzugt 2 bis 100, besonders bevorzugt 2 bis 50, ganz besonders bevorzugt 4 bis 50, auf dem Träger angebrachte Schichten.

5. Schichtelemente nach Anspruch 1, herstellbar aus Polymermaterialien, die in oder an der Polymerkette Reaktivgruppen aus der folgenden Aufzählung enthalten:
-COOH, -COCl, -OCOCl, -SO₃H, SO₂Cl, -NCO, -NCS, 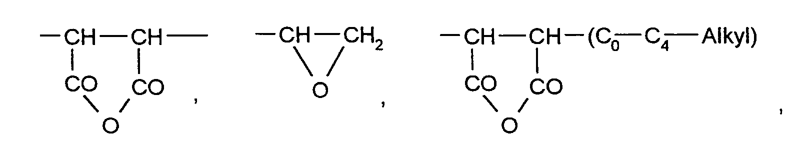 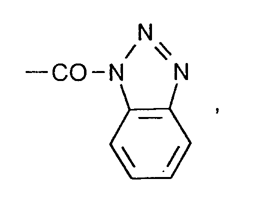 -COO-Phenyl, -COO-(C₁-C₄-Alkyl), -NH₂, -NH-Phenyl, -NH-(C₁-C₄-Alkyl), -NH-Benzyl, -NH-, -OH, aktivierte Carboxylgruppen, von denen folgende Reaktivgruppen bevorzugt sind: 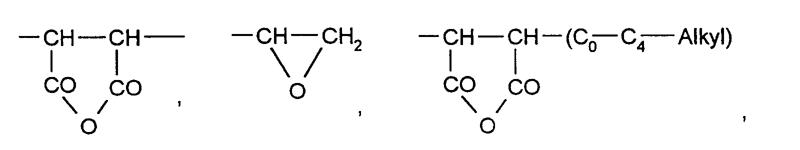 -COCl, -NCO, -COO-Phenyl, -COO-(C₁-C₄-Alkyl), -NH₂, -NH-,

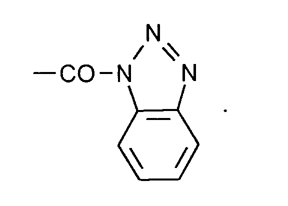

6. Schichtelemente nach Anspruch 1, herstellbar aus Reaktivgruppen enthaltenden Polymermaterialien mit einem Molekulargewicht von 5 000 bis 10 Millionen, wobei die die Reaktivgruppe enthaltende oder tragende Polymerkette eines aus der folgenden Aufzählung ist: Polyalkylenimin, (Co)Polyolefin, Polyvinyl(co)polymer, Polyester, Polyamid, Acrylpolymer.

7. Verfahren nach Anspruch 2, dadurch gekennzeichnet, daß die Lösung der Polymermaterialien 10⁻⁴ bis 10⁻¹-molar bezüglich der Anzahl der in Lösung vorhandenen Reaktivgruppen ist.

8. Verfahren nach Anspruch 2, dadurch gekennzeichnet, daß die Einwirkungszeit für die Auftragung jeder einzelnen Schicht 0,1 min bis 24 h, bevorzugt 1 min bis 3 h, besonders bevorzugt 5 bis 60 min, beträgt.
